# EUROPÄISCHE PATENTSCHRIFT

(11) **EP 4 359 206 B1**
(45) Veröffentlichungstag und Bekanntmachung des Hinweises auf die Patenterteilung: **16.07.2025**
(21) Anmeldenummer: 23720077.9
(22) Anmeldetag: 17.04.2023
(51) Int. Cl.: B23D 15/00, B23D 15/14, B30B 15/02, B23D 15/02, B23D 35/00, B21D 39/04, B30B 7/04, B30B 15/08

(54) **RADIALPRESSE**
RADIAL PRESS
PRESSE RADIALE

(30) Priorität: 19.04.2022 DE 202022102074 U
(43) Veröffentlichungstag der Anmeldung: 01.05.2024
(73) Patentinhaber: Uniflex-Hydraulik GmbH, 61184 Karben (DE)
(72) Erfinder: BAUMGARTNER, Carsten, 35321 Laubach (DE); DAVID, Martin, 61194 Niddatal (DE)
(74) Vertreter: Grättinger Möhring von Poschinger Patentanwälte Partnerschaft mbB
(86) Internationale Anmeldenummer: PCT/EP2023/059885
(87) Internationale Veröffentlichungsnummer: WO 2023/202970

(56) Entgegenhaltungen:
- EP-B1- 3 178 579
- DE-A1- 102016 102 275
- DE-U1- 202016 100 660
- DE-U1- 202021 100 569
- US-A1- 2008 209 975

## Beschreibung

Die vorliegende Erfindung betrifft eine Radialpresse mit mindestens sechs gleichmäßig und konzentrisch um eine Pressachse herum angeordneten Grundbacken, welche mittels einer Antriebseinheit radial in Richtung auf die Pressachse und von dieser weg bewegbar sind, wobei die Grundbacken jeweils radial innen eine Anlagefläche sowie mechanische Haltemittel für auswechselbar an ihnen anbringbare Pressbacken aufweisen.

Insbesondere betrifft die vorliegende Erfindung, wie im Oberbegriff des Anspruchs 1 angegeben, eine Radialpresse der vorstehend angegebenen Art, bei der in dem nach außen durch die Grundbacken begrenzten Werkzeugeinbauraum ein mehrere jeweils an einer Grundbacke angebrachte Schneidaufsätze umfassendes Schneidwerkzeug aufgenommen ist, wobei die Schneidaufsätze jeweils eine Basisstruktur umfassen und mindestens einer von ihnen weiterhin eine Schneidstruktur umfasst, wobei ferner die Basisstruktur jeweils eine an der Anlagefläche der zugeordneten Grundbacke anliegende Stützfläche sowie mindestens ein mit den mechanischen Haltemitteln der zugeordneten Grundbacke zusammenwirkendes Eingriffselement aufweist, und wobei darüber hinaus die mindestens eine Schneidstruktur in Richtung auf die Pressachse von der zugeordneten Basisstruktur absteht und, der Stützfläche der zugeordneten Basisstruktur abgewandt, eine Schneidkante aufweist.

Radialpressen, welche sich für Radialverpressungen verschiedenster Art (z. B. das dauerhafte Anbringen von Anschlussarmaturen endseitig an ein Schlauchstück zur Herstellung einer Hydraulik-Schlauchleitung) eignen, sind in verschiedenen Konzeptionen (z. B. Hohlkolbenpresse, Druckplattenpresse und Jochpresse) und diversen Ausgestaltungen bekannt. Zu verweisen ist beispielsweise auf die DE 20 2016 100 660 U1, DE 20 2016 008 097 U1, DE 10 2016 106 650 A1, DE 10 2014 014 585 B3, DE 10 2014 012 485 B3, DE 10 2014 008 613 A1, DE 10 2011 015 770 A1, DE 10 2011 015 654 A1, DE 10 2009 057 726 A1, DE 10 2005 041 487 A1, DE 10 2005 034 260 B3, DE 601 21 915 T2, DE 298 24 688 U1, DE 199 44 141 C1, DE 199 40 744 B4, DE 101 49 924 A1, DE 41 35 465 A1 und DE 35 13 129 A1. Unabhängig von ihrer jeweiligen Bauweise und sonstigen technischen Merkmalen stimmen die bekannten Radialpressen darin überein, dass eine Mehrzahl von gleichmäßig um die Pressachse herum verteilt angeordneten, im Querschnitt etwa keilförmigen Grundbacken - am gebräuchlichsten sind acht Grundbacken - mittels eines (typischerweise hydraulischen) Antriebs gleichmäßig radial in Richtung auf die Pressachse bewegt werden. An die Grundbacken sind dabei radial innen Pressbacken anbringbar, welche eine an die Geometrie (insbesondere den Durchmesser) des jeweils zu pressenden Werkstücks angepasste Pressfläche aufweisen.

Radialpressen der hier in Rede stehenden Art sind mit einem erheblichen Investitionsaufwand verbunden. Dies gilt namentlich für moderne hochpräzise Hochleistungspressen. Die mit deren Anschaffung verbundenen Kosten können insbesondere für Werkstätten und vergleichbare eher kleine Einrichtungen, in denen die hier in Rede stehenden Radialpressen zum Einsatz kommen, eine signifikante finanzielle Belastung darstellen.

Aus der EP 3 178 579 B1 ist eine Radialpresse mit den Merkmalen des Oberbegriffs des Anspruchs 1 bekannt geworden. Gegenüber konventionellen Radialpressen (s. o.) ist eine Steigerung der Wirtschaftlichkeit insoweit möglich, als sich gemäß der EP 3 178 579 B1 eine Radialpresse der hier in Rede stehenden Art bei einer - gewissermaßen zweckentfremdenden - Bestückung mit einem spezifischen, an die technischen Besonderheiten der Radialpresse angepassten Schneidwerkzeug auch zur Durchführung von auf das (Durch-)Trennen von Werkstücken gerichteten Aufgaben einsetzen lässt. Gerade Werkstätten und vergleichbare eher kleine Einrichtungen, in denen Radialpressen zum Einsatz kommen, können sich auf diese Weise sehr erhebliche effizienzsteigernde Effekte zunutze machen. Die Auslastung der Radialpresse lässt sich in relevanter Weise steigern; denn in typischen Werkstätten fallen diverse anspruchsvolle Trenn-Arbeiten an, die sich mit auch zur Durchführung von Trenn-Arbeiten hergerichteten Radialpresse durchführen lassen. Die gesteigerte wirtschaftliche Effizienz profitiert dabei auch von dem Umstand, dass idealerweise die Anschaffung einer spezifischen, ausdrücklichen Trenn- bzw. Schneidmaschine (oder gar mehrerer solcher Maschinen) vermieden werden kann. Damit entfällt auch der sonst bestehende Platzbedarf; und ohne eine spezifische, ausdrückliche Trenn- bzw. Schneidmaschine fällt auch ansonsten mit dieser verbundener Wartungs- und Serviceaufwand nicht an.

Gegenüber dem der EP 3 178 579 B1 entnehmbaren Stand der Technik liegt der vorliegenden Erfindung die Aufgabe zugrunde, die Wirtschaftlichkeit noch weitergehend zu steigern, insbesondere durch Verbesserungen hinsichtlich der Lebensdauer der betreffenden Radialpresse.

Gelöst wird diese Aufgabe, wie in Anspruch 1 angegeben, dadurch, dass bei einer gattungsgemäßen Radialpresse das Schneidwerkzeug Linear-Führungselemente aufweist, welche zwei einander diametral gegenüberliegende Basisstrukturen zueinander führen mit relativer Bewegbarkeit senkrecht zur Pressachse. Mittels der in das Schneidwerkzeug selbst implementierten Linear-Führungselemente werden beim Schneiden auftretende, zwischen den beiden Schneidkanten mit quer zur Schneidrichtung orientierter Richtung wirkende Reaktionskräfte bzw. -kraftanteile (Querkräfte) innerhalb des Schneidwerkzeugs selbst zurückgeführt. Durch einen solchen direkten, geschlossenen inneren Kraftfluss innerhalb des Schneidwerkzeugs werden auf die Grundbacken der Radialpresse wirkende Querkräfte vermieden. Dies ist wiederum ein Effekt von erheblicher Bedeutung für die Lebensdauer der Radialpresse. Die sich zwischen den beiden Basisstrukturen erstreckenden, diese linear geführt miteinander koppelnden Linear-Führungselemente können zudem ggf. eine Führung des Werkstücks bzw. - nach dessen Durchtrennen - der beiden Werkstückteile bewirken.

Im Rahmen der vorliegenden Erfindung besteht ein signifikanter Gestaltungsspielraum hinsichtlich der Realisierung des Schneidwerkzeugs, d. h. insbesondere der an den Grundbacken der Radialpresse angebrachten Schneidaufsätze. Deren konstruktive und bauliche Gestaltung kann, wie die nachstehenden Erläuterungen vermitteln, unter Berücksichtigung der funktionellen und strukturellen Besonderheiten der jeweiligen Radialpressen-Konzeption im Hinblick auf die jeweilige Trennaufgabe optimiert werden, wobei der flexiblen Adaption der Radialpresse an die jeweilige Trennaufgabe mit geringstmöglichem Aufwand der Umstand zugute kommt, dass die Radialpresse schon in ihrer Grundausführung gewissermaßen "von Haus aus" zur Bestückung mit unterschiedlichen Pressbacken ausgeführt ist.

In einer ersten bevorzugten Ausgestaltung der Erfindung weist ein Schneidaufsatz, der Pressachse zugewandt und der Schneidstruktur eines anderen Schneidaufsatzes gegenüberstehend, eine Gegenhalterstruktur mit einer Werkstück-Auflagefläche auf. In einer baulich besonders einfachen Konkretisierung dieser Weiterbildung umfasst das in den Werkzeugeinbauraum eingesetzte Schneidwerkzeug demnach genau zwei Schneidaufsätze, welche auf zwei einander diametral gegenüberstehende Grundbacken aufgesetzt sind. Einer der beiden Schneidaufsätze weist dabei eine Schneidstruktur, der andere, dieser gegenüberstehend, eine Gegenhalterstruktur auf. Im Betrieb dieser Radialpresse durchtrennt die Schneidkante der Schneidstruktur das sich auf der Werkstück-Auflagefläche der Gegenhalterstruktur abstützende Werkstück, wobei die Werkstück-Auflagefläche der Gegenhalterstruktur hinsichtlich ihrer Geometrie typischerweise an die Geometrie der Schneidkante und ggf. auch an das Werkstück angepasst ist. Die Gegenhalterstruktur kann dabei von der zugeordneten Basisstruktur in Richtung auf die Pressachse abstehen. Im Extremfall kann allerdings die Gegenhalterstruktur Teil der Basisstruktur selbst sein, indem die Werkstück-Auflagefläche durch die der Pressachse zugewandte Oberfläche der Basisstruktur des betreffenden Schneidaufsatzes gebildet ist.

Eine andere bevorzugte Weiterbildung der Erfindung zeichnet sich dadurch aus, dass mindestens zwei Schneidaufsätze - jeweils in Richtung auf die Pressachse von der zugeordneten Basisstruktur abstehend - Schneidstrukturen aufweisen, deren Schneidkanten miteinander schneidend interagieren. Als eine solche, das Durchtrennen des jeweiligen Werkstücks bewirkende schneidende Interaktion kommt dabei insbesondere ein Scheren in Betracht. Zu diesem Zweck sind, in einer entsprechenden besonders bevorzugten Ausgestaltung dieser Weiterbildung, die Schneidkanten zweier Schneidaufsätze zueinander - in einer Richtung quer zur Bewegungsrichtung der Schneidaufsätze zueinander - parallelversetzt angeordnet; bei einer zu der Pressachse senkrechten Orientierung der Schneidkanten wären diese somit in Richtung der Pressachse zueinander parallel versetzt. Im Zuge der Schließbewegung der Radialpresse wird infolge des besagten Parallelversatzes der Schneidkanten auf das Werkstück eine Scherwirkung ausgeübt.

Für diverse gerade mit der erfindungsgemäß hergerichteten Radialpresse durchzuführende Trennaufgaben wird allerdings als schneidende Interaktion, mittels derer das jeweilige Werkstück durchtrennt wird, statt eines Scherens ein Kneifen bevorzugt. Zu diesem Zweck weisen, in einer besonders bevorzugten alternativen Ausgestaltung, die Schneidstrukturen zueinander korrespondierende Schneidkanten auf, welche einander in relativer Bewegungsrichtung der Schneidaufsätze zueinander, **d. h.** in der Bewegungsebene gegenüberstehen. Die Schneidkanten der Schneidstrukturen zweier Schneidaufsätze korrespondieren in diesem Sinne zueinander, wenn sie am Ende der in Richtung auf die Pressachse orientierten Radialbewegung der Grundbacken (idealisiert) längs einer Kontaktlinie aufeinandertreffen oder längs ihrer Erstreckung einander mit einem - beispielsweise von dem Material des zu durchtrennenden Werkstücks abhängigen - minimalen Abstand (z. **B.** 0,2 mm) gegenüberstehen.

Bei dieser bevorzugten Realisierung der Schneidaufsätze mit dergestalt zueinander korrespondierend ausgeführten Schneidkanten, dass diese bei vollständig geschlossenem Schneidwerkzeug idealisiert linienförmig aufeinandertreffen, kann die betreffende idealisierte Kontaktlinie - durch geradlinige Ausführung der beiden Schneidkanten - geradlinig sein. Allerdings ist dies keineswegs zwingend. Je nach der beabsichtigten Anwendung kommen, wie dies weiter unten näher ausgeführt wird, auch ein- oder zweidimensional von einer geraden Linie abweichende Schneidkanten-Geometrien in Betracht - was im Übrigen auch gilt für die beiden zueinander versetzten, ein Scheren des Werkstücks bewirkenden Schneidkanten eines entsprechenden Schneidwerkzeugs (s. o.), um einen nicht-ebenen Schnitt zu erzeugen. Durch die Ausführung der Schneidkanten der Schneidaufsätze dergestalt, dass sie zueinander korrespondieren und einander in relativer Bewegungsrichtung der Schneidaufsätze gegenüberstehen, lassen sich - anders als dies für zueinander versetzte, ein Scheren des Werkstücks bewirkende Schneidkanten gilt - asymmetrisch, d. h. insbesondere in Richtung der Pressachse zueinander versetzt auf die die Schneidaufsätze tragenden Grundbacken wirkende Reaktionskräfte vermeiden. Dies kann von erheblicher praxisrelevanter Bedeutung sein, weil verschiedene typische Radialpressen herkömmlicher Bauart auf derartige asymmetrische Belastungsprofile mit erhöhtem Verschleiß und somit einer reduzierten Lebensdauer reagieren. Dies wäre kontraproduktiv im Hinblick auf die vorliegende, auf eine gesteigerte Wirtschaftlichkeit gerichtete Aufgabenstellung.

Ein weiterer großer praxisrelevanter Vorteil dieser Ausgestaltung ist, dass zum Durchtrennen des Werkstücks nicht nur, wie beim Scheren, zwei Schneidstrukturen zum Einsatz kommen können, sondern insbesondere auch - z. B. bei einer sechs Grundbacken aufweisenden Radialpresse - drei oder - z. B. bei einer acht Grundbacken aufweisenden Radialpresse - vier Schneidstrukturen. Hierbei können die Schneidkanten bevorzugt jeweils abgewinkelt sein mit einer ausgeprägten Spitze, und zwar beispielsweise bei drei Schneidstrukturen mit einem Winkel von 120° bzw. bei vier Schneidstrukturen mit einem Winkel von 90°. Bei diesen, durch die Existenz von mehr als zwei Schneidstrukturen gekennzeichneten Ausgestaltungen wirkt sich nicht nur positiv aus, dass ein Ausweichen des Werkstücks beim Durchtrennen unterbunden und das Eindringen der - eine Spitze ausbildenden - Schneidkanten in das Werkstück erleichtert wird; auch die gleichmäßigere Krafteinleitung und der günstigere Kraftfluss in der Radialpresse sind vorteilhaft, insbesondere bei Radialpressen in Hohlkolben- oder Druckplattenbauweise.

Zur Vermeidung von Fehlvorstellungen ist vorsorglich nochmals darauf hinzuweisen, dass die vorstehend erläuterten, einander in einer Schneidebene gegenüberstehenden Schneidkanten keineswegs zwingend einander am Ende der Schneidbewegung berühren müssen, schon gar nicht auf ganzer Länge. Vielmehr sind für verschiedene Trennaufgaben, d. h. für das Durchtrennen verschiedener Werkstücke, auch solche Ausgestaltungen von Vorteil, bei denen die Schneidkanten einen Abstand zueinander einhalten bzw. zwischen sich - ggf. auf einem Teil ihrer Länge - einen für das jeweilige Werkstück geeignet (z. B. rund, oval oder polygonal) gestalteten Freiraum definieren. Weiterhin ist darauf hinzuweisen, dass die mit den Schneidaufsätzen bestückten Grundbacken keineswegs zwingend synchron bewegt werden müssen; dies ist zwar in den meisten Anwendungsfällen der Erfindung sachgerecht, aber es kommt bei einer geeigneten Ausgestaltung der Antriebseinheit (z. B. mittels individuell gesteuerter Einzelantriebe) im Einzelfall durchaus auch eine in einer vorgebbaren Abfolge zueinander zeitlich (ggf. einander überlappend) versetzte Radialbewegung der Grundbacken in Betracht.

Gemäß einer anderen bevorzugten Weiterbildung der Erfindung sind die Anlageflächen der Grundbacken sowie die Stützflächen der Basisstrukturen der Schneidaufsätze zueinander korrespondierend zylindrisch gewölbt. Dies kann eine selbstjustierende bzw. selbstsichernde Lagerung der Schneidaufsätze an den zugeordneten Grundbacken in dem Sinne begünstigen, dass beim Schneidvorgang entstehenden Seitenkräfte besser in die Grundbacken abgetragen werden, was zu einer Entlastung der zur Lagesicherung der Schneidaufsätze herangezogenen Haltemittel-Eingriffselement-Paarungen beitragen kann. Zudem trägt diese Gestaltung zu einem günstigen Kraftfluss unter Verringerung schädlicher Spannungsspitzen bei. Besonders bevorzugt stehen dabei die Basisstrukturen der Schneidaufsätze in Umfangsrichtung über die zugeordneten Grundbacken über. Solche Überstände bilden (zumindest teilweise) Abdeckungen für die zwischen der betreffenden Grundbacke und den beiden benachbarten Grundbacken bestehenden Spalte. So wird die Gefahr reduziert, dass beim Schneidprozess entstehende Werkstück-Splitter oder sonstige Fragmente in die betreffenden Spalte gelangen.

Der vorstehend herausgearbeitete Effekt kommt insbesondere dann zum Tragen, wenn, gemäß einer wiederum anderen bevorzugten Ausgestaltung der Erfindung, die beiden Schneidaufsätze an vertikal übereinander angeordneten Grundbacken angebracht sind. Von einer solchen Anordnung der Schneidaufsätze profitiert auch die Handhabung beim Einsatz der erfindungsgemäß hergerichteten Radialpresse; denn das zu schneidende Werkstück kann ggf. auf der Schneidkante des unteren Schneidaufsatzes abgelegt werden, dass den Bediener entlastet und eine besonders präzise Schnittführung erlaubt.

Im Zusammenhang mit der vorstehend dargelegten Anordnung der Schneidaufsätze vertikal übereinander, allerdings weiterhin auch wegen der inhärenten Statik des betreffenden Maschinenkonzepts und des dieser eigenen charakteristischen Kraftflusses, ist die vorliegende Erfindung ganz besonders bevorzugt bei als sog. Jochpressen ausgeführten Radialpressen umgesetzt, d. h. bei solchen Radialpressen, welche ein unteres Joch und ein oberes Joch aufweisen, deren vertikaler Abstand zueinander mittels mindestens eines (z. B. als Hydraulikzylinder ausgeführten) Antriebselements veränderbar ist. Hier sind in Umsetzung der vorliegenden Erfindung besonders hohe Schnittkräfte realisierbar. Das gilt insbesondere, wenn die Schneidaufsätze auf jene beiden Grundbacken aufgesetzt sind, welche ortsfest zu dem unteren Joch bzw. dem oberen Joch angeordnet sind.

Gemäß einer wiederum anderen bevorzugten Weiterbildung der Erfindung umfasst das Schneidwerkzeug zwei sich im Wesentlichen parallel zur Pressachse erstreckende Wandelemente, die bei geschlossenem Schneidwerkzeug den (Zwischen-)Raum zwischen den beiden Basisstrukturen seitlich begrenzen. So wird - zumindest auf einem Teilbereich der Schneidbewegung der beiden Schneidaufsätze zueinander - der Bereich, in dem das zu schneidende Werkstück durchtrennt wird, zur Seite hin abgeschlossen. Dies trägt - ebenfalls (s. o.) - zu einer Verringerung der Gefahr bei, dass beim Schneidprozess entstehende Werkstück-Splitter oder sonstige Fragmente in die zwischen der betreffenden Grundbacke und den beiden benachbarten Grundbacken bestehenden Spalte gelangen. Bei einer vertikalen Schneidrichtung sind die besagten Wandelemente besonders bevorzugt an der Basisstruktur des unteren Schneidaufsatzes angebracht bzw. bilden einen Teil von dieser.

Ungeachtet ihrer Detail-Geometrie (geradlinig oder aber ein- bzw. zweidimensional hiervon abweichend; s. o.) sind die beiden Schneidkanten für diverse typische Anwendungsfälle für die vorliegende Erfindung besonders bevorzugt zumindest im Wesentlichen quer zur Pressachse orientiert. Hierdurch werden zu - potentiell der Lebensdauer der Radialpresse abträglichen - asymmetrischen Spannungsprofilen führende Belastungen so weit wie möglich vermieden. Zudem erlaubt diese Ausgestaltung des Schneidwerkzeugs das Durchtrennen von in dieses mit zur Pressachse paralleler Orientierung eingelegten Werkstücken (z. B. Schläuche, Stangen, Rohre, Stäbe, Kettenglieder, etc.) mit kleinster Schnittfläche und somit kraftoptimiert. Für ein optimales Ergebnis bei anderen Anwendungsfällen (z. B. das Sprengen von Rohren, Hülsen, Muttern, etc.) erweist sich indessen als günstig, wenn die beiden Schneidkanten - wiederum ungeachtet ihrer Detail-Geometrie (geradlinig oder aber ein- bzw. zweidimensional hiervon abweichend; s. o.) - zumindest im Wesentlichen parallel zur Pressachse orientiert sind. Für wiederum andere Anwendungsfälle erweisen sich schräg zur Pressachse orientierte Schneidkanten als günstig. Vor diesem Hintergrund zeichnet sich eine besonders bevorzugte Ausgestaltung der Erfindung dadurch aus, dass die Schneidstrukturen hinsichtlich der Orientierung der jeweiligen Schneidkante verstellbar an der zugeordneten Basisstruktur angebracht sind.

Für die Handhabung der erfindungsgemäß hergerichteten Radialpresse, namentlich die Durchführung von Trennaufgaben mit guter Reproduzierbarkeit, ist von besonderem Vorteil, wenn das Schneidwerkzeug, gemäß einer wiederum anderen Weiterbildung der Erfindung, mindestens eine im Bereich einer Stirnseite einer Basisstruktur vorgesehene Werkstückaufnahme aufweist. Eine solche Werkstückaufnahme kann dabei insbesondere auswechselbar an der zugeordneten Basisstruktur angebracht sein, was mit geringem Aufwand die - der Reproduzierbarkeit förderliche - spezifische Anpassung des Schneidwerkzeugs an die unterschiedlichsten Trennaufgaben bzw. Werkstücke erlaubt. Gemäß einer besonders bevorzugten Ausgestaltung ist die (ggf. auswechselbar an der zugeordneten Basisstruktur angebrachte) Werkstückaufnahme als Dorn ausgeführt; dies erweist sich beispielsweise beim Durchtrennen von Ketten als sehr vorteilhaft, wenn ein Glied der zu durchtrennenden Kette an dem Dorn eingehängt wird. Ist der Dorn dabei so weit von den beiden Schneidkanten beabstandet, dass nicht das zu durchtrennende Kettenglied selbst eingehängt wird, sondern vielmehr eines mit Abstand dazu, so trägt der Dorn dazu bei, nach dem Schneiden den betreffenden Abschnitt der durchtrennten Kette zu halten und daran zu hindern herunter zu fallen. Dies ist auch unter Gesichtspunkten des Arbeitsschutzes vorteilhaft.

Ein weitgehend vergleichbar positives Resultat lässt sich - gemäß einer alternativen bevorzugten Ausgestaltung - erreichen, wenn die (ggf. auswechselbar an der zugeordneten Basisstruktur angebrachte) Werkstückaufnahme als ein eine Aussparung aufweisendes Blech ausgeführt ist, wobei die Aussparung so dimensioniert ist, dass in sie das dem zu durchtrennenden Kettenglied benachbarte Kettenglied eingelegt wird.

Gemäß einer nochmals anderen sehr vorteilhaften Weiterbildung der Erfindung sind an mindestens zwei weiteren Grundbacken der Radialpresse Zentrier- und/oder Halteaufsätze angebracht mit zu den Schneidstrukturen des Schneidwerkzeugs axial versetzten Werkstückhaltern. Besonders bevorzugt sind die Zentrier- und/oder Halteaufsätze dabei nachgiebig dergestalt, dass Werkstückanlageflächen der Werkstückhalter ihren Abstand zu den zugeordneten Grundbacken gegen eine Vorspannung verringern können. Beim Schließen der Radialpresse, d. h. wenn die Grundbacken sich (bevorzugt synchron) radial in Richtung auf die Pressachse bewegen, kommen die Werkstückhalter der Zentrier- und/oder Halteaufsätze an dem zu durchtrennenden Werkstück vor oder kurz nach dem Aufsetzen der Schneiden des Schneidwerkzeugs auf dem Werkstück zur Anlage; sie halten auf diese Weise das Werkstück während des (weiteren) Durchtrennens in Position und verhindern ein Ausweichen bzw. Verrutschen, was zu einer sauberen Schnittführung beiträgt. Ein weiterer sehr vorteilhafter Effekt der Zentrier- und/oder Halteaufsätze kann darin bestehen, dass sie den/die betreffenden Abschnitt(e) des zu durchtrennenden bzw. des durchtrennten Werkstücks auch nach dem Schneiden noch halten und daran hindern herunter zu fallen und/oder aus dem Schneidwerkzeug heraus katapultiert zu werden. Dies ist wiederum unter Gesichtspunkten des Arbeitsschutzes sehr vorteilhaft.

Im Folgenden werden verschiedene bevorzugte Ausführungsbeispiele der vorliegenden Erfindung anhand der Zeichnung näher erläutert. In dieser zeigt
- Fig. 1: in front-/bedienerseitiger Perspektive den hier relevanten Bereich einer nach einem ersten Ausführungsbeispiel erfindungsgemäß hergerichteten Radialpresse,
- Fig. 2: in vergrößerter Darstellung das in dem Werkzeugeinbauraum aufgenommene, zwei Schneidaufsätze umfassende Schneidwerkzeug der Radialpresse nach Fig. 1 in geöffneter Stellung,
- Fig. 3: das in dem Werkzeugeinbauraum aufgenommene Schneidwerkzeug der Radialpresse nach den Figuren 1 und 2 in geschlossener Stellung,
- Fig. 3a: eine Abwandlung des Schneidwerkzeugs nach dem ersten Ausführungsbeispiel,
- Fig. 4: in perspektivischer Darstellung das nach einem zweiten Ausführungsbeispiel der Erfindung in dem Werkzeugeinbauraum der Radialpresse aufzunehmende, vier Schneidaufsätze umfassende Schneidwerkzeug in geschlossener Stellung,
- Fig. 5: in perspektivischer Darstellung einen der vier Schneidaufsätze des Schneidwerkzeugs nach Fig. 4,
- Fig. 6: einen Axialschnitt durch das Schneidwerkzeug nach Fig. 4,
- Fig. 7: in perspektivischer Darstellung das nach einem dritten Ausführungsbeispiel der Erfindung in dem Werkzeugeinbauraum der Radialpresse aufzunehmende, zwei Schneidaufsätze und zwei Zentrier- und Halteaufsätze umfassende Schneidwerkzeug in geschlossener Stellung,
- Fig. 8: das Schneidwerkzeug nach Fig. 7 im Halbschnitt,
- Fig. 9: in perspektivischer Darstellung das nach einem vierten Ausführungsbeispiel der Erfindung in dem Werkzeugeinbauraum der Radialpresse aufzunehmende Schneidwerkzeug in geschlossener Stellung
- Fig. 10: einen Axialschnitt durch das Schneidwerkzeug nach Fig. 9,
- Fig. 11: einen zu dem Axialschnitt nach Fig. 10 parallelversetzten Vertikalschnitt durch das Schneidwerkzeug nach den Figuren 9 und 10,
- Fig. 12: in perspektivischer Darstellung das nach einem fünften Ausführungsbeispiel der Erfindung in dem Werkzeugeinbauraum der Radialpresse aufzunehmende Schneidwerkzeug in geschlossener Stellung,
- Fig. 13: in perspektivischer Darstellung das nach einem sechsten Ausführungsbeispiel der Erfindung in dem Werkzeugeinbauraum der Radialpresse aufzunehmende Schneidwerkzeug in geschlossener Stellung und
- Fig. 14: in perspektivischer Darstellung das nach einem siebten Ausführungsbeispiel der Erfindung in dem Werkzeugeinbauraum der Radialpresse aufzunehmende Schneidwerkzeug in teilweise geschlossener Stellung.

Die den verschiedenen in der Zeichnung vermittelten Ausführungsbeispielen der Erfindung zugrundeliegende, konzeptionell nach Art einer Jochpresse ausgeführte Radialpresse entspricht dem einschlägigen Stand der Technik, wie er dem maßgeblichen Fachmann vertraut ist. Konkret veranschaulicht ist die Erfindung dabei anhand der Radialpresse HM 325 der Uniflex-Hydraulik GmbH, 61184 Karben (Deutschland).

Die betreffende Radialpresse umfasst eine Basis 1, ein zu dieser stationäres Unterjoch 2 und ein Oberjoch 3, welches relativ zu dem Unterjoch 2 vertikal auf und ab bewegbar ist. Das Oberjoch 3 ist hierzu in zwei von der Basis 1 aufragenden Führungen 4 verschiebbar geführt. Erkennbar sind weiterhin die oberen Endabschnitte 5 zweier hydraulischer Antriebszylinder 6, welche in bekannter Weise Teil der die Relativbewegung des Oberjochs 3 und des Unterjochs 2 bezüglich einander bewirkenden Antriebseinheit sind. Und auch die Bedieneinheit 7, die u. a. dem Einrichten der Radialpresse durch Aufrufen eines in der Maschinensteuerung ablaufenden Pressprogramms und dessen spezifische Adaption dient, ist erkennbar.

Die Radialpresse weist in bekannter Weise acht gleichmäßig und konzentrisch um eine Pressachse X herum angeordnete Grundbacken 8 auf, welche infolge der Relativbewegung von Oberjoch 3 und Unterjoch 2 bezüglich einander synchron - beim Absenken des Oberjochs 3 - radial in Richtung auf die Pressachse X und - beim Hochfahren des Oberjochs 3 - radial von der Pressachse X weg bewegbar sind. Die Grundbacken 8 weisen jeweils radial innen eine zylindrisch gewölbte Anlagefläche 9 für auswechselbar an ihnen anbringbare Pressbacken auf. Weiterhin umfassen die Grundbacken 8 - in ihrem Inneren - mechanische Haltemittel in Form jeweils eines federbelasteten Haltestifts, welcher bei einer auf die betreffende Grundbacke 8 aufgesetzten Pressbacke verriegelnd eingreift in eine korrespondierende Aussparung eines radial außen an der betreffenden Pressbacke vorgesehenen, in die Bohrung 10 der Grundbacke 9 eingesteckten Haltezapfens. Da in dem vorstehenden Umfang die bei den Ausführungsbeispielen zum Einsatz kommende Radialpresse dem hinlänglich bekannten Stand der Technik, auf den Bezug genommen wird, entspricht, erübrigen sich weitergehende Erläuterungen.

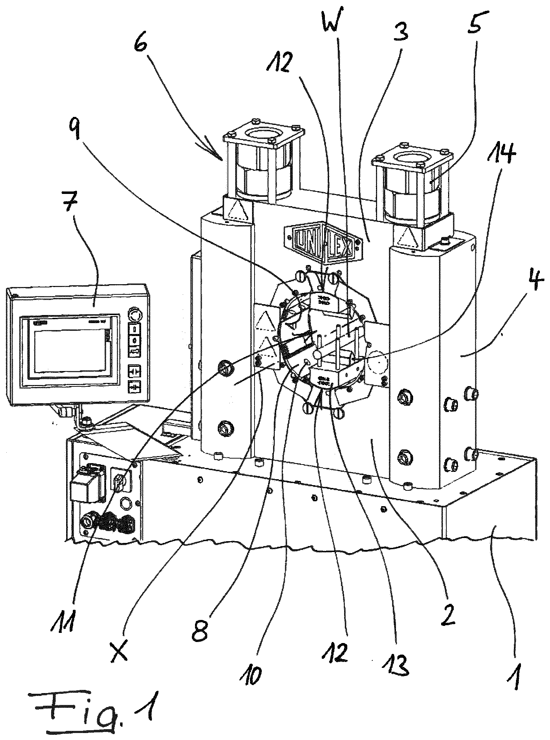

Nach den ein erstes Ausführungsbeispiel der Erfindung veranschaulichenden Figuren 1 bis 3 ist die Radialpresse mit einem Schneidwerkzeug 11 bestückt. Dieses ist in dem nach außen durch die Grundbacken 8 begrenzten Werkzeugeinbauraum aufgenommen. Es umfasst zwei an einander gegenüberliegenden Grundbacken 8 angebrachte Schneidaufsätze 12, nämlich einen an der - zu dem Unterjoch 2 lagefesten - unteren Grundbacke 8.1 ("6-Uhr Grundbacke") angebrachten ersten Schneidaufsatz 12.1 und einen an der - zu dem Oberjoch 3 lagefesten - oberen Grundbacke 8.2 ("12-Uhr Grundbacke") angebrachten zweiten Schneidaufsatz 12.2.

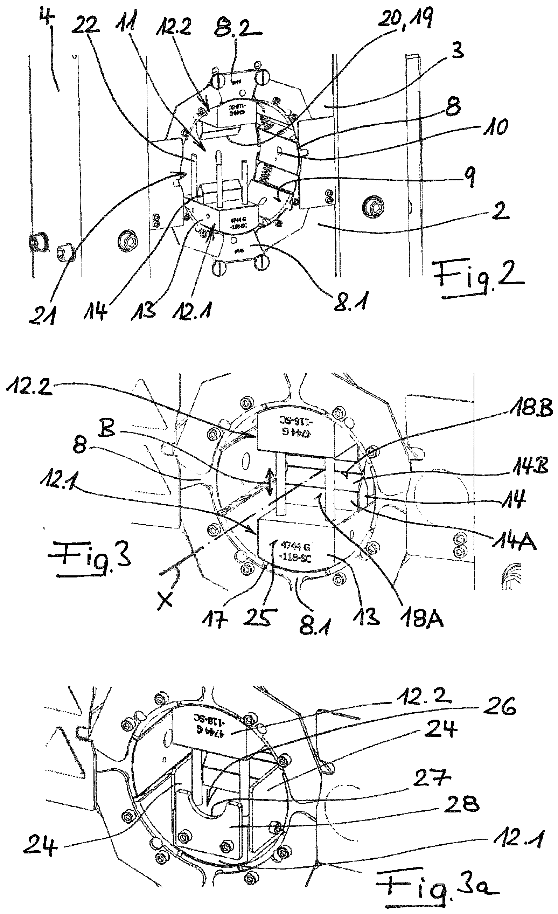

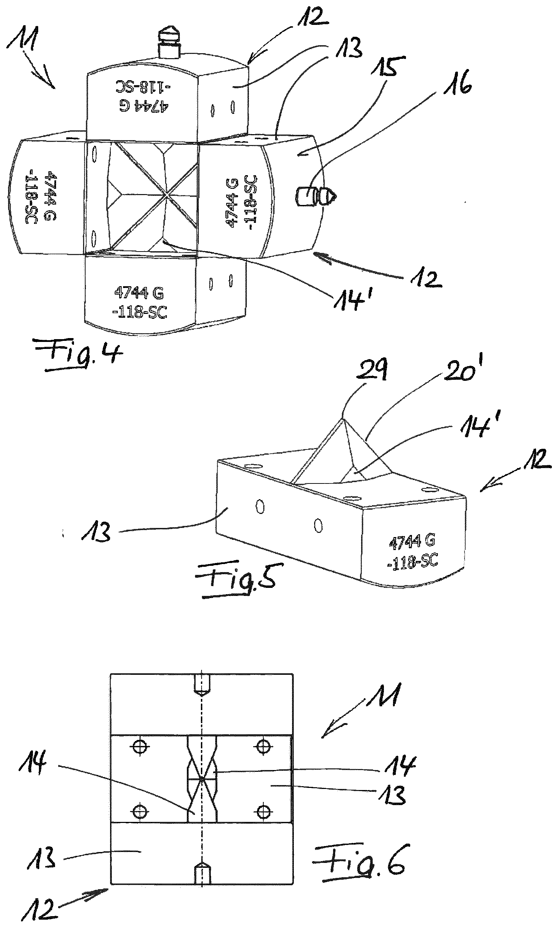

Jeder der beiden Schneidaufsätze 12.1, 12.2 umfasst eine Basisstruktur 13 und eine Schneidstruktur 14. Die Basisstruktur 13 weist dabei jeweils eine an der Anlagefläche 9 der zugeordneten Grundbacke 8 anliegende, zu dieser korrespondierend zylindrisch gewölbte Stützfläche 15 (vgl. Fig. 4) auf; sie umfasst weiterhin - analog zu den für die Verwendung in der Radialpresse bestimmten Pressbacken - ein mit den mechanischen Haltemitteln der zugeordneten Grundbacke 8 zusammenwirkendes Eingriffselement in Form eines in die Bohrung 10 der zugeordneten Grundbacke 8 eintretenden Haltezapfens 16 (vgl. Fig. 4). Die Basisstrukturen 13 der Schneidaufsätze 12 stehen in Umfangsrichtung über die jeweils zugeordnete Grundbacke 8 über (vgl. Figuren 2 und 3); sie überdecken somit bei geschlossener Radialpresse (und somit geschlossenem Schneidwerkzeug 11) die zwischen der betreffenden, den Schneidaufsatz 12 tragenden Grundbacke 8 und den beiden benachbarten Grundbacken bestehenden Spalte 17 (vgl. Fig. 3).

Die Schneidstruktur 14 steht jeweils in Richtung auf die Pressachse X von der Basisstruktur 13 des betreffenden Schneidaufsatzes 12 ab. Sie ist prismatisch ausgeführt mit einem Sockelbereich 14A (mit zueinander parallel orientierten Wandabschnitten 18A) und einem Schneidenbereich 14B (mit einander unter einem spitzen Winkel schneidenden Wandabschnitten 18B). Die Schnittkante 19 der zuletzt genannten Wandabschnitte 18B definiert dabei jeweils eine schneidenartige Schneidkante 20. Die Schneidkanten 20 der beiden Schneidaufsätze 12 stehen einander dabei in relativer Bewegungsrichtung B der Schneidaufsätze 12 zueinander, d. h. in der Bewegungsebene der Schneidstrukturen 14 gegenüber. Sie korrespondieren zueinander, indem sie bei geschlossener Radialpresse (Fig. 3) miteinander (idealisiert) längs einer Berührungslinie in Kontakt stehen. Infolge der entsprechenden Ausrichtung der Schneidstrukturen 14 sind dabei (auch) die Schneidkanten 20 quer zur Pressachse X orientiert.

Die Schneidstrukturen 14 bestehen aus gehärtetem Stahl. Sie sind - über übliche Passstift-Verbindungen - an der jeweils zugeordneten Basisstruktur 13 angebracht. Dies erlaubt eine Nachbearbeitung der von den Basisstrukturen 13 abgenommenen Schneidstrukturen 14 bzw. deren Austausch im Falle von Abnutzung bzw. Verschleiß. Zudem gestattet dies bei einer geeigneten Ausführung der Basisstrukturen 13 die verstellbare Anbringung der Schneidstrukturen 14 an diesen in unterschiedlichen Winkelanordnungen, z. B. auch im Winkel von 30°, 45° und/oder 60° zur Pressachse X oder parallel zu dieser.

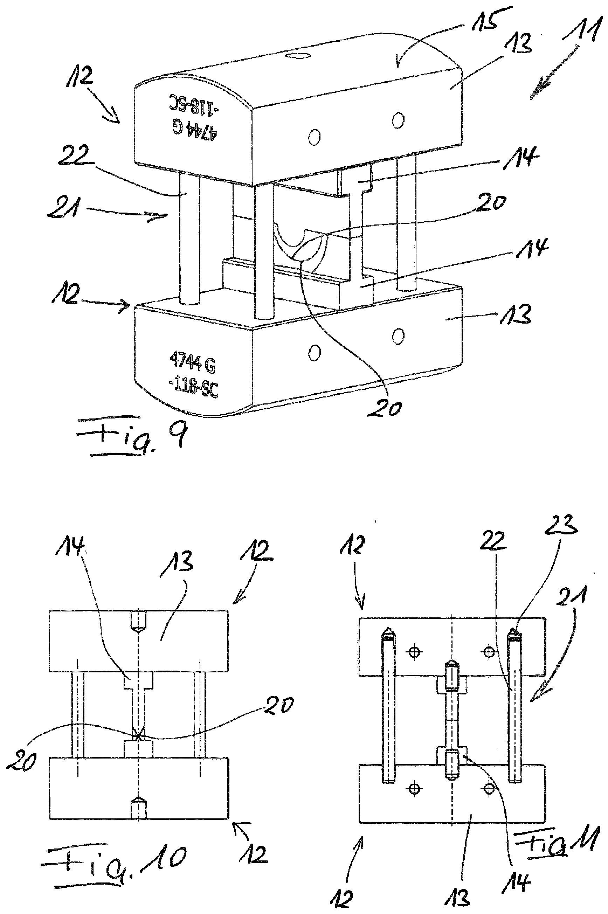

Bei dem Ausführungsbeispiel nach den Figuren 1 bis 3 weist das Schneidwerkzeug 11 weiterhin Linear-Führungselemente 21 auf, welche die beiden Basisstrukturen 13 zueinander führen mit relativer Bewegbarkeit senkrecht zur Pressachse X, d. h. in Bewegungsrichtung B. Die Linear-Führungselemente 21 sind dabei in Form von vier Führungsbolzen 22 ausgeführt, welche fest mit der Basisstruktur 13 des unteren, ersten Schneidaufsatzes 12.1 verbunden sind und beim Schließen der Radialpresse in zugeordnete, an der Basisstruktur 13 des oberen, zweiten Schneidaufsatzes 12.2 ausgeführte Führungsbohrungen 23 (vgl. Fig. 11) eintreten.

Bei der in Fig. 3a veranschaulichten Abwandlung des Schneidwerkzeugs 11 nach dem ersten Ausführungsbeispiel umfasst das Schneidwerkzeug 11 zusätzlich zwei sich im Wesentlichen parallel zur Pressachse X erstreckende, an der Basisstruktur 13 des unteren, ersten Schneidaufsatzes 12.1 seitlich angebrachte Wandelemente 24, die bei geschlossenem Schneidwerkzeug 11 den Zwischenraum zwischen den beiden Basisstrukturen 13 seitlich begrenzen. Weiterhin weist das Schneidwerkzeug 11 nach Fig. 3a eine im Bereich der dem Bediener zugewandten Stirnseite 25 auswechselbar an der Basisstruktur 13 des ersten Schneidaufsatzes 12.1 vorgesehene Werkstückaufnahme 26 - in Form eines eine Aussparung 27 für das Werkstück W (vgl. Fig. 1) aufweisenden Blechs 28 - auf.

Nach dem in den Figuren 4 bis 6 - nur im Umfang des Schneidwerkzeugs 11 - veranschaulichten zweiten Ausführungsbeispiel weist das Schneidwerkzeug 11, mit dem die Radialpresse nach dem ersten Ausführungsbeispiel anstelle des in den Figuren 1 bis 3 gezeigten Schneidwerkzeugs zu bestücken ist, nicht zwei, sondern vielmehr vier Schneidaufsätze 12 auf. Die Basisstrukturen 13 entsprechen dabei im Wesentlichen jenen des ersten Ausführungsbeispiels. Die Schneidstrukturen 14' sind demgegenüber grundlegend anders gestaltet. Sie sind nämlich jeweils mit einer abgewinkelten Schneidkante 20' ausgeführt, wobei die beiden Abschnitte jeder Schneidkante 20' unter einem 90°-Winkel in einer Spitze 29 zusammenlaufen. Fig. 6 lässt zudem erkennen, dass hier der Schneidenwinkel - mit etwa 45° - substantiell geringer ist als der Schneidenwinkel des Schneidwerkzeugs 11 nach dem ersten Ausführungsbeispiel.

Bei Anwendung dieses Schneidwerkzeugs 11 kommt eine Anbringung der vier Schneidaufsätze 12 an den Grundbacken 8 in den 12-Uhr-, 3-Uhr-, 6-Uhr- und 9-Uhr-Positionen in Betracht, aber auch eine bezüglich der Pressachse X um 45° gedrehte Anbringung.

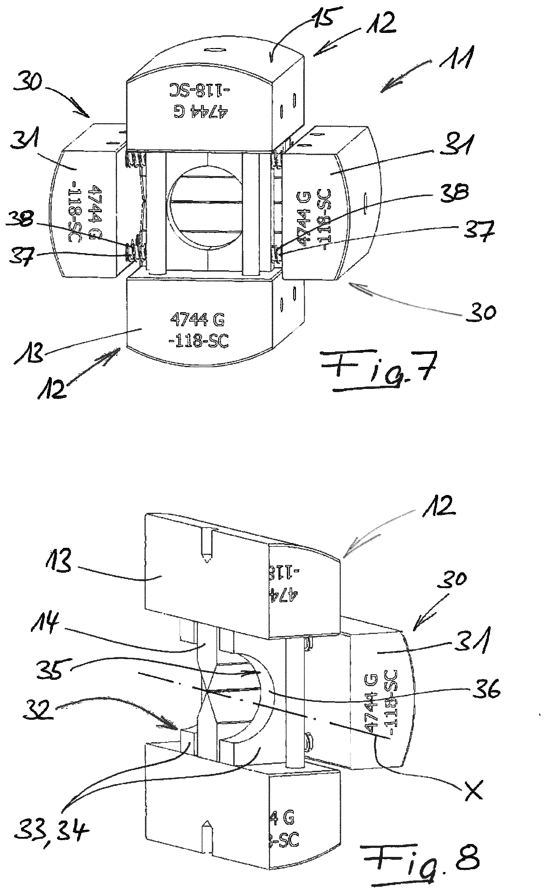

Das in den Figuren 7 und 8 - wiederum nur im Umfang des Schneidwerkzeugs 11 - veranschaulichte dritte Ausführungsbeispiel erklärt sich, was die beiden Schneidaufsätze 12 angeht, aus den Erläuterungen zu dem in den Figuren 1 bis 3 gezeigten ersten Ausführungsbeispiel der Erfindung. Gegenüber diesem zeichnet sich das dritte Ausführungsbeispiel durch die beiden zusätzlichen Zentrier- und Halteaufsätze 30 aus, welche - bezüglich der Pressachse X um 90° gedreht - zwischen den beiden Schneidaufsätzen 12 angeordnet sind. Jeder Zentrier- und Halteaufsatz 30 umfasst eine Basisstruktur 31 und eine Zentrier- und Haltestruktur 32. Für die Basisstruktur 31 gelten - insbesondere im Hinblick auf die Anbringung an einer Grundbacke 8 der mit dem Schneidwerkzeug 11 auszustattenden Radialpresse - die vorstehenden, die Basisstruktur 13 der Schneidaufsätze 12 betreffenden Erläuterungen in entsprechender Weise. Die jeweilige Zentrier- und Haltestruktur 32 umfasst zwei Werkstückhalter 33 in Form von Haltebacken 34 mit einer an die Geometrie des zu durchtrennenden Werkstücks W angepassten Aussparung 35 (Werkstückanlagefläche 36). Die Haltebacken 34 sind dabei zu den Schneidstrukturen 14 der beiden Schneidaufsätze 12 axial versetzt dergestalt, dass die Schneidstrukturen 14 zwischen den Haltebacken 34 angeordnet sind. Die Haltebacken 34 sind an der zugeordneten Basisstruktur 31 federnd nachgiebig gelagert dergestalt, dass Werkstückanlageflächen 36 der Werkstückhalter 33 ihren Abstand zu den zugeordneten Grundbacken 8 gegen eine Vorspannung verringern können. Hierzu dienen Kombinationen aus Führungsbolzen 37 und Vorspannfedern 38. Dies ermöglicht, dass die vier Werkstückhalter 33 sich schon frühzeitig um das zu durchtrennende Werkstück W herum schließen, idealerweise bereits bei oder kurz nach Beginn des Schneidprozesses.

Das in den Figuren 9 bis 11 - wiederum nur im Umfang des Schneidwerkzeugs 11 - veranschaulichte vierte Ausführungsbeispiel erklärt sich, was die beiden Schneidaufsätze 12 angeht, aus den Erläuterungen zu dem in den Figuren 1 bis 3 gezeigten ersten Ausführungsbeispiel der Erfindung. Gegenüber diesem zeichnet sich das vierte Ausführungsbeispiel dadurch aus, dass die beiden zueinander korrespondierenden Schneidkanten 20 nicht geradlinig verlaufen, sondern vielmehr gemäß einem Kreisbogenabschnitt. Sie beschränken sich zudem auf einen Teil der Breite der Schneidstrukturen 14, nämlich deren mittleren Bereich.

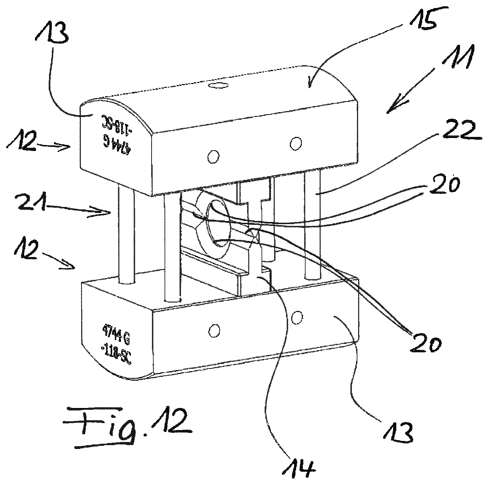

Auch das in Fig. 12 - wiederum nur im Umfang des Schneidwerkzeugs 11 - veranschaulichte fünfte Ausführungsbeispiel erklärt sich im Wesentlichen aus den Erläuterungen zu dem in den Figuren 1 bis 3 gezeigten ersten Ausführungsbeispiel der Erfindung. Gegenüber diesem zeichnet sich das fünfte Ausführungsbeispiel dadurch aus, dass die beiden Schneidkanten 20 nur bereichsweise, nämlich in zwei äußeren Abschnitten, in dem Sinne zueinander korrespondieren, dass sie bei geschlossenem Schneidwerkzeug 11 (idealisiert) linienförmig aneinander anliegen. In einem zentralen Abschnitt korrespondieren die Schneidkanten 20 demgegenüber nicht zueinander, sondern definieren vielmehr eine (hier beispielhaft mit einer runden Kontur veranschaulichte) Schneidöffnung 39. Ersichtlich kann die Geometrie der Schneidöffnung 39 an die Geometrie des zu durchtrennenden Werkstücks W adaptiert sein.

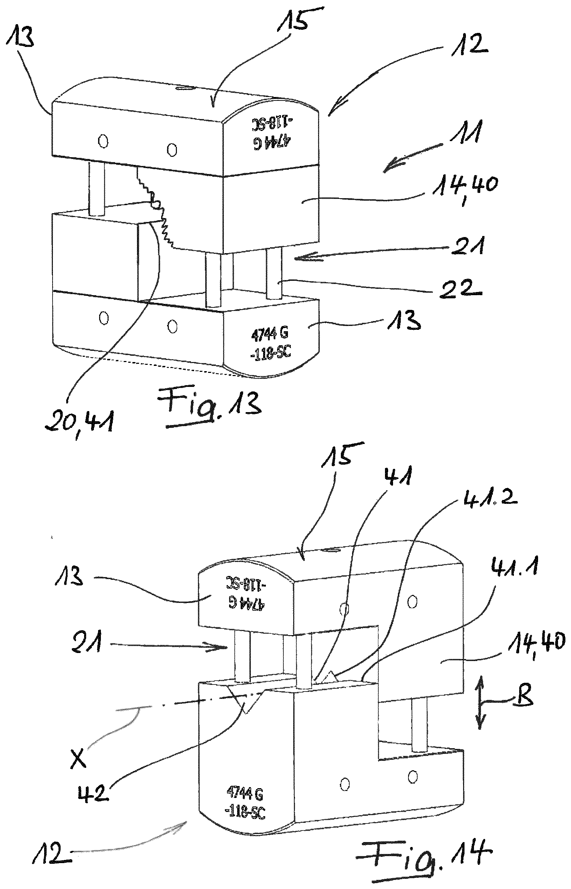

Anders als dies für die Schneidwerkzeuge gemäß den fünf vorstehend erläuterten Ausführungsbeispielen gilt, sind diejenigen nach den Figuren 13 und 14 nicht für das Durchtrennen eines Werkstücks durch Kneifen hergerichtet, sondern vielmehr für das Durchtrennen eines Werkstücks durch Scheren.

Bei dem in Fig. 13 - erneut nur im Umfang des Schneidwerkzeugs - veranschaulichten sechsten Ausführungsbeispiel der Erfindung besteht das Schneidwerkzeug 11 aus zwei Schneidaufsätzen 12 sowie vier Linear-Führungselementen 21. Jeder der beiden Schneidaufsätze 12 umfasst dabei seinerseits eine Basisstruktur 13 sowie eine in Richtung auf die Pressachse von dieser abstehende Schneidstruktur 14. Für die jeweilige Basisstruktur 13 sowie die vier Linear-Führungselemente 21 gelten uneingeschränkt die obigen Erläuterungen, auf die zur Vermeidung von Wiederholungen verwiesen wird. Die beiden Schneidstrukturen 14 sind demgegenüber hier als in Richtung der Pressachse X zueinander versetzte Scherblöcke 40 ausgeführt. Jeder der Scherblöcke 40 definiert eine Schneidkante 20 in Form einer Scherkante 41. Diese sind bei dem sechsten Ausführungsbeispiel gerade ausgeführt.

Bei dem in Fig. 14 veranschaulichten siebten Ausführungsbeispiel der Erfindung sind die - die Schneidkanten 20 bildenden - Scherkanten 41 der Scherblöcke 40 demgegenüber nicht geradlinig. Sie verlaufen vielmehr - in einer auf der Pressachse X senkrecht stehenden Scherebene - jeweils mehrfach abgewinkelt, und zwar dergestalt, dass zwei äußere Abschnitte 41.1 auf einer zur Bewegungsrichtung B orthogonalen Geraden liegen, die beiden dazwischen liegenden inneren Abschnitte 41.2 demgegenüber V-förmig zueinander orientiert. Die V-förmige Anordnung der inneren Scherkantenabschnitte 41.2 geht dabei einher mit einer - einen V-förmigen Querschnitt aufweisenden - Werkstück-Aufnahmenut 42 auf jener Fläche des betreffenden Scherblocks 40, die der Basisstruktur 13 des jeweils anderen Schneidaufsatzes 12 zugewandt ist.

Erkennbar ist in Fig. 14 weiterhin, dass es sich im Rahmen der vorliegenden Erfindung bei der Basisstruktur 13 und der Schneidstruktur 14 auch um zwei Funktionsbereiche eines einzigen Bauteils handeln, d. h. der betreffende Schneidaufsatz 12 einstückig ausgeführt sein kann. Dies gilt, wie zur Vermeidung von Fehlvorstellungen vorsorglich ausdrücklich festgestellt wird, ersichtlich entsprechend auch für die übrigen vorstehend erläuterten Ausführungsbeispiele der Erfindung.

## Patentansprüche

1. Radialpresse mit mindestens sechs gleichmäßig und konzentrisch um eine Pressachse (X) herum angeordneten Grundbacken (8), welche mittels einer Antriebseinheit radial in Richtung auf die Pressachse (X) und von dieser weg bewegbar sind, wobei die Grundbacken (8) jeweils radial innen eine Anlagefläche (9) sowie mechanische Haltemittel für auswechselbar an ihnen anbringbare Pressbacken aufweisen, wobei in dem nach außen durch die Grundbacken (8) begrenzten Werkzeugeinbauraum ein Schneidwerkzeug (11) aufgenommen ist mit folgenden Merkmalen:
- das Schneidwerkzeug (11) umfasst mehrere jeweils an einer Grundbacke (8) angebrachte Schneidaufsätze (12);
- die Schneidaufsätze (12) umfassen jeweils eine Basisstruktur (13), und mindestens einer von ihnen umfasst weiterhin eine Schneidstruktur (14);
- die Basisstruktur (13) weist jeweils eine an der Anlagefläche (9) der zugeordneten Grundbacke (8) anliegende Stützfläche (15) sowie mindestens ein mit den mechanischen Haltemitteln der zugeordneten Grundbacke (8) zusammenwirkendes Eingriffselement auf;
- die mindestens eine Schneidstruktur (14) steht in Richtung auf die Pressachse (X) von der zugeordneten Basisstruktur (13) ab und weist, der Stützfläche (15) der zugeordneten Basisstruktur (13) abgewandt, eine Schneidkante (20) auf;
**dadurch gekennzeichnet, dass** das Schneidwerkzeug (11) Linear-Führungselemente (21) aufweist, welche zwei einander diametral gegenüberliegende Basisstrukturen (13) zueinander führen mit relativer Bewegbarkeit (B) senkrecht zur Pressachse (X).

2. Radialpresse nach Anspruch **1, dadurch gekennzeichnet, dass** ein Schneidaufsatz (12), der Pressachse (X) zugewandt und der Schneidkante (20) der Schneidstruktur (14) eines anderen Schneidaufsatzes (12) gegenüberstehend, eine Gegenhalterstruktur mit einer Werkstück-Auflagefläche aufweist.

3. Radialpresse nach Anspruch **1, dadurch gekennzeichnet, dass** mindestens zwei Schneidaufsätze (12) Schneidstrukturen (14) aufweisen, deren Schneidkanten (20) miteinander schneidend interagieren.

4. Radialpresse nach Anspruch **3, dadurch gekennzeichnet, dass** die Schneidkanten (20) zueinander in einer Richtung quer zur Bewegungsrichtung (B) der Schneidaufsätze (12) zueinander parallelversetzt angeordnet sind für eine Scherwirkung auf das Werkstück (W).

5. Radialpresse nach Anspruch **3, dadurch gekennzeichnet, dass** die Schneidstrukturen (14) einander in relativer Bewegungsrichtung (B) der Schneidaufsätze (12) zueinander gegenüberstehende, zueinander korrespondierende Schneidkanten (20) aufweisen.

6. Radialpresse nach einem der Ansprüche 1 bis 5, **dadurch gekennzeichnet, dass** sie zwei an einander gegenüberliegenden, bevorzugt an vertikal übereinander angeordneten Grundbacken (8) angebrachte Schneidaufsätze (12) umfasst.

7. Radialpresse nach Anspruch 6, **dadurch gekennzeichnet, dass** sie als Jochpresse ausgeführt ist mit einem unteren Joch (2) und einem oberen Joch (3), wobei mittels der Antriebseinheit der Abstand der Joche (2; 3) zueinander veränderbar ist.

8. Radialpresse nach einem der Ansprüche 3 bis 7, **dadurch gekennzeichnet, dass** jede zweite Grundbacke (8) mit einem Schneidaufsatz (12) bestückt ist.

9. Radialpresse nach einem der Ansprüche 1 bis 8, **dadurch gekennzeichnet, dass** die Anlageflächen (9) der Grundbacken (8) sowie die Stützflächen (15) der Basisstrukturen (13) der Schneidaufsätze (12) zueinander korrespondierend zylindrisch gewölbt sind.

10. Radialpresse nach einem der Ansprüche 1 bis 9, **dadurch gekennzeichnet, dass** die Basisstrukturen (13) der Schneidaufsätze (12) in Umfangsrichtung über die zugeordneten Grundbacken (8) überstehen.

11. Radialpresse nach einem der Ansprüche 1 bis 10, **dadurch gekennzeichnet, dass** die mindestens eine Schneidkante (20) quer zur Pressachse (X) orientiert ist.

12. Radialpresse nach einem der Ansprüche 1 bis 10, **dadurch gekennzeichnet, dass** die mindestens eine Schneidkante (20) schräg oder parallel zur Pressachse (X) orientiert ist.

13. Radialpresse nach einem der Ansprüche 1 bis 9, **dadurch gekennzeichnet, dass** die mindestens eine Schneidstruktur (14) hinsichtlich der Orientierung ihrer Schneidkante (20) verstellbar an der zugeordneten Basisstruktur (13) angebracht ist.

14. Radialpresse nach einem der Ansprüche 1 bis 13, **dadurch gekennzeichnet, dass** das Schneidwerkzeug (11) zwei einander diametral gegenüberliegende Schneidaufsätze (12) und zwei sich im Wesentlichen parallel zur Pressachse (X) erstreckende Wandelemente (24) umfasst, die bei geschlossenem Schneidwerkzeug (11) den Zwischenraum zwischen den beiden Basisstrukturen (13) seitlich begrenzen.

## Claims

1. Radial press with at least six base jaws (8), which are disposed uniformly and concentrically around a press axis (X), and which can be moved by means of a drive unit radially toward the press axis (X) and away from it, wherein the base jaws (8) are respectively provided on the radial inside with a contact face (9) as well as with mechanical retaining means for press jaws that can be mounted exchangeably on them, wherein there is received in the tool mounting space bounded on the outside by the base jaws (8) a cutting tool (11) with the following features:
- the cutting tool (11) comprises a plurality of cutting attachments (12) mounted respectively on a base jaw (8);
- the cutting attachments (12) respectively comprise a base structure (13) and at least one of them further comprises a cutting structure (14);
- the base structure (13) respectively has a bracing face (15) bearing on the contact face (9) of the associated base jaw (8) as well as at least one engaging element cooperating with the mechanical retaining means of the associated base jaw (8);
- the at least one cutting structure (14) protrudes toward the press axis (X) from the associated base structure (13) and has, facing away from the bracing face (15) of the associated base structure (13), a cutting edge (20);
**characterized in that** the cutting tool (11) has linear guide elements (21), which guide two base structures (13) disposed diametrically opposite one another relative to one another with relative movability (B) perpendicular to the press axis (X).

2. Radial press of claim 1, **characterized in that** a cutting attachment (12) is provided, facing the press axis (X) and disposed opposite the cutting edge (20) of the cutting structure (14) of another cutting attachment (12), with a backing structure having a workpiece support face.

3. Radial press of claim 1, **characterized in that** at least two cutting attachments (12) have cutting structures (14) with cutting edges (20) that interact with one another in cutting relationship.

4. Radial press of claim 3, **characterized in that**, for a shearing action on the workpiece (W), the cutting edges (20) are disposed relative to one another, in a direction transverse to the direction of movement (B) of the cutting attachments (12) relative to one another, in parallel offset relationship.

5. Radial press of claim 3, **characterized in that** the cutting structures (14) have cutting edges (20) that correspond to one another and are disposed opposite one another in relative direction of movement (B) of the cutting attachments (12) relative to one another.

6. Radial press of one of claims 1 to 5, **characterized in that** it comprises two cutting attachments (12) mounted on base jaws (8) disposed opposite one another, preferably vertically one above the other.

7. Radial press of claim 6, **characterized in that** it is constructed as a yoke press with a lower yoke (2) and an upper yoke (3), wherein the spacing of the yokes (2; 3) relative to one another can be varied by means of the drive unit.

8. Radial press of one of claims 3 to 7, **characterized in that** every second base jaw (8) is equipped with a cutting attachment (12).

9. Radial press of one of claims 1 to 8, **characterized in that** the contact faces (9) of the base jaws (8) as well as the bracing faces (15) of the base structures (13) of the cutting attachments (12) are cylindrically curved in a manner corresponding to one another.

10. Radial press of one of claims 1 to 9, **characterized in that** the base structures (13) of the cutting attachments (12) project in circumferential direction over the associated base jaws (8).

11. Radial press of one of claims 1 to 10, **characterized in that** the at least one cutting edge (20) is oriented transverse to the press axis (X).

12. Radial press of one of claims 1 to 10, **characterized in that** the at least one cutting edge (20) is oriented obliquely or parallel to the press axis (X).

13. Radial press of one of claims 1 to 9, **characterized in that** the at least one cutting structure (14) is mounted, with respect to the orientation of its cutting edge (20), adjustably on the associated base structure (13).

14. Radial press of one of claims 1 to 13, **characterized in that** the cutting tool (11) comprises two cutting attachments (12) disposed diametrically opposite one another and two wall elements (24) that extend substantially parallel to the press axis (X) and, when the cutting tool (11) is closed, laterally bound the space between the two base structures (13).

## Revendications

1. Presse radiale, pourvue d'au moins six mors de base (8), placés régulièrement et de manière concentrique autour d'un axe (X) de presse, lesquels au moyen d'une unité d'entraînement sont déplaçables radialement en direction de l'axe (X) de presse et en éloignement de celui-ci, les mors de base (8) comportant chacun radialement à l'intérieur une surface d'appui (9), ainsi que des moyens de retenue mécaniques pour des mors de presse susceptibles d'être montés de manière interchangeable sur eux, dans l'espace de montage d'outils délimité vers l'extérieur par les mors de base (8) étant réceptionné un outil de coupe (11), présentant les caractéristiques suivantes :
- l'outil de coupe (11) comprend plusieurs embouts de coupe (12), montés chacun sur un mors de base (8) ;
- les embouts de coupe (12) comprennent chacun une structure de base (13) et au moins l'un d'entre eux comprend par ailleurs une structure de coupe (14) ;
- la structure de base (13) comporte chaque fois un surface de soutien (15) s'appuyant sur la surface d'appui (9) des mors de base (8) associés, ainsi qu'au moins un élément d'engagement, coopérant avec les moyens de retenue mécaniques du mors de base (8) associé ;
- l'au moins une structure de coupe (14) déborde en direction vers l'axe (X) de presse de la structure de base (13) associée et comporte, à l'opposée de la surface de soutien (15) de la structure de base (13) associée, un taillant (20) ;
**caractérisée en ce que** l'outil de coupe (11) comporte des éléments de guidage (21) linéaires, lesquels guident l'une vers l'autre deux structures de base (13) placées diamétralement en vis-à-vis, avec une capacité de déplacement (B) relative à la perpendiculaire de l'axe (X) de presse.

2. Presse radiale selon la revendication 1, **caractérisée en ce qu'**un embout de coupe (12) fait face à l'axe (X) de presse et au vis-à-vis du taillant (20) de la structure de coupe (14) d'un autre embout de coupe (12), comporte une structure de contre-support pourvue d'une surface de dépose de pièce à usiner.

3. Presse radiale selon la revendication 1, **caractérisée en ce qu'**au moins deux embouts de coupe (12) comportent des structures de coupe (14), dont les taillants (20) interagissent mutuellement en coupe.

4. Presse radiale selon la revendication 3, **caractérisée en ce que** les taillants (20) sont placés l'un par rapport à l'autre en décalage parallèle dans une direction à la transversale de la direction de déplacement (B) des embouts de coupe (12), pour exercer un effet de cisaillement sur la pièce à usiner (W).

5. Presse radiale selon la revendication 3, **caractérisée en ce que** les structures de coupe (14) comportent de taillants (20), se correspondant mutuellement, placés au vis-à-vis les uns des autres dans la direction de déplacement (B) relative des embouts de coupe (12).

6. Presse radiale selon l'une quelconque des revendications 1 à 5, **caractérisée en ce qu'**elle comprend deux embouts de coupe (12) montés sur des mors de base (8) placés au vis-à-vis l'un de l'autre, de préférence superposés à la verticale.

7. Presse radiale selon la revendication 6, **caractérisée en ce qu'**elle est réalisée sous la forme d'une presse à culasses, pourvue d'une culasse (2) inférieure et d'une culasse (3) supérieure, au moyen de l'unité d'entraînement, l'écart mutuel entre les culasses (2 ; 3) étant variable.

8. Presse radiale selon l'une quelconque des revendications 3 à 7, **caractérisée en ce qu'**un mors de base (8) sur deux est équipé d'un embout de coupe (12).

9. Presse radiale selon l'une quelconque des revendications 1 à 8, **caractérisée en ce que** les surfaces d'appui (9) des mors de base (8), ainsi que les surfaces de soutien (15) des structures de base (13) des embouts de coupe (12) sont recourbées en cylindre en se correspondant mutuellement.

10. Presse radiale selon l'une quelconque des revendications 1 à 9, **caractérisée en ce que** les structures de base (13) des embouts de coupe (12) saillissent dans la direction périphérique au-delà des mors de base (8) associés.

11. Presse radiale selon l'une quelconque des revendications 1 à 10, **caractérisée en ce que** l'au moins un taillant (20) est orienté à a transversale de l'axe (X) de presse.

12. Presse radiale selon l'une quelconque des revendications 1 à 10, **caractérisée en ce que** l'au moins un taillant (20) est orienté en oblique ou à la parallèle de l'axe (X) de presse.

13. Presse radiale selon l'une quelconque des revendications 1 à 9, **caractérisée en ce que** l'au moins une structure de coupe (14) est montée sur la structure de base (13) associée de manière ajustable au niveau de l'orientation de son taillant (20).

14. Presse radiale selon l'une quelconque des revendications 1 à 13, **caractérisée en ce que** l'outil de coupe (11) comprend deux embouts de coupe (12), placés diamétralement en vis-à-vis et deux éléments de paroi (24) s'étendant sensiblement à la parallèle de l'axe (X) de presse, qui lorsque l'outil de coupe (11) est fermé, délimitent latéralement l'espace intermédiaire entre les deux structures de base (13).
